# EUROPEAN PATENT SPECIFICATION

(11) **EP 1 918 225 B1**
(45) Date of publication and mention of the grant of the patent: **30.12.2009**
(21) Application number: 07119568.9
(22) Date of filing: 30.10.2007
(51) Int. Cl.: B65G 27/02, B65G 47/14

(54) **Product Transport Apparatus**
Produkttransportvorrichtung
Appareil de transport de produits

(30) Priority: 06.11.2006 JP 2006300669
(43) Date of publication of application: 07.05.2008
(73) Proprietor: Sankyo Seisakusho Co., Tokyo (JP)
(72) Inventor: Kato, Heizaburo, Kikugawa-shi Shizuoka 1434-1 (JP); Kato, Toshinao, Kikugawa-shi Shizuoka 2290 (JP)
(74) Representative: Neumann, Ditmar

(56) References cited:
- EP-A- 0 391 213
- DE-A1- 3 327 426
- US-A- 3 414 112
- US-A- 4 239 103

## Description

### BACKGROUND

### Technical Field

The present invention relates to product transport apparatuses that transport products by applying oscillations to a transport section, and in particular to product transport apparatuses according to the preamble of claim 1.

### Related Art

Conventionally, various kinds of product transport apparatuses for supplying so-called bulk products and the like one by one have been proposed, in which the products are placed on a transport section and lined up in a line while transporting them through oscillations (see for example JP-A-2003-240423). In such a product transport apparatus, it is preferable that the products are supplied without interruptions onto the transport section. Therefore, there are product transport apparatuses that are provided with a product supply section for storing the products which are supplied to the transport section.

However, even in such product transport apparatuses that are provided with a product supply section as described above, if a proper supply state from the product supply section is not maintained, an improved performance as a transport system is not achieved, and there is also the risk that the product quality is adversely affected.. For example, if the amount of products supplied from the product supply section is too small, the flow of products is interrupted and due to this lack of supply of products, the process of the next step will be delayed. And if the supplied amount of products is too large, the problem occurs that the time for which the products are in slight contact with each other due to oscillations increases, so that there is the risk that the surface of the products is slightly damaged and the quality of the finished products is degraded.

A product transport apparatus according to the preamble of claim 1 is disclosed in US-A-3414112.

### SUMMARY

The present invention has been contrived in view of the above circumstances and it is an object thereof to realize a product transport apparatus with which the supply state from a product supply section can be maintained in a proper state.

A main aspect of the present invention for achieving the foregoing object, is a product transport apparatus according to claim 1 as appended.

Other features of the present invention will become clear from the description of the present specification and the accompanying drawings.

### BRIEF DESCRIPTION OF THE DRAWINGS

Fig.. 1 is an overall plan view showing a product transport apparatus according to an embodiment of the present invention..

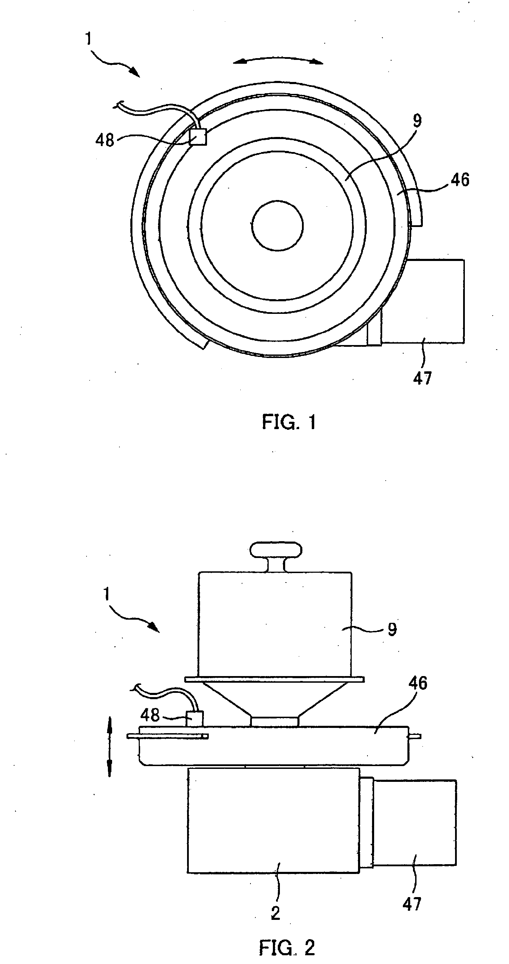

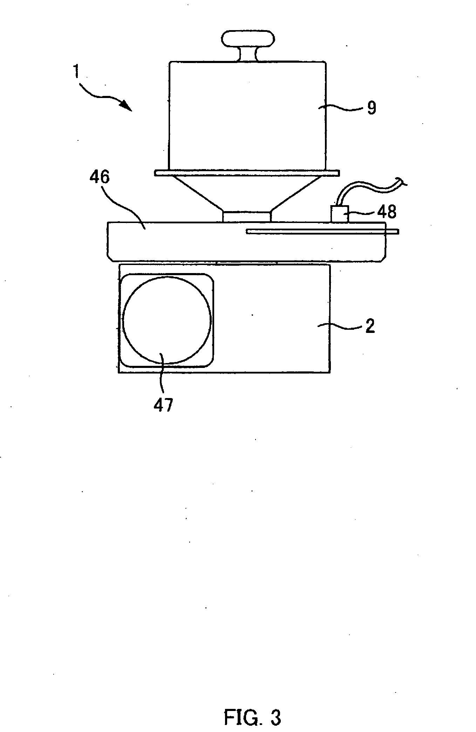

Fig. 2 is a front view of the product transport apparatus shown in Fig. 1.
Fig.. 3 is a side view of the product transport apparatus shown in Fig.. 1.
Fig.. 4 is a cross-sectional view of the internal structure seen from the front side.
Fig.. 5 is a cross-sectional view of the internal structure seen from the lateral side.
Fig. 6 is a cross-sectional view illustrating a supply stop mechanism.
Fig. 7 is a top cross-sectional view showing the internal structure.
Fig. 8 is a diagram illustrating the operation of the second cam mechanism..
Fig. 9 is a diagram illustrating the operation of the first cam mechanism.

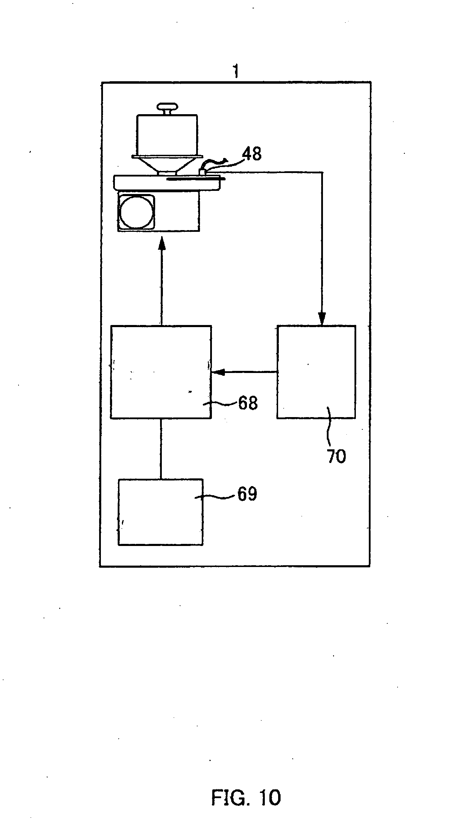

Fig. 10 is a block diagram showing the configuration for controlling the supply stop mechanism.
Fig. 11 is a diagram taken illustrating the state when workpieces W are supplied from the hopper.
Fig.. 12 is a detailed view of the region A in Fig. 11.
Fig.. 13 is an example of a timing chart illustrating the operation of the supply stop mechanism..
Fig.. 14 is a cross-sectional view of a product transport apparatus provided with a stop position adjustingmechanismof a supply stop section..
Fig. 15 is a detailed view of the portion B in Fig. 14.
Fig. 16 is a diagram illustrating a different support method of a hopper.

### DESCRIPTION OF EXEMPLARY EMBODIMENTS

At least the following matters will be made clear by the explanation in the present specification and the description of the accompanying drawings.

A product transport apparatus includes a transport section for transporting a product by oscillating; a driving section for applying oscillations to the transport section; a product supply section for storing products therein, the product supply section having an aperture for supplying the stored products to the transport section; and a supply stop section that can stop the supply of the products from the aperture by being brought close to the aperture, wherein, when the products are supplied from the product supply section to the transport section, the supply stop section moves away from the aperture and the supply stop section causes at least some of the products on the supply stop section to move toward the transport section by oscillating..

With such a product transport apparatus, a supply stop section is provided that can stop the supply of products from the aperture of the product supply section, in which the products are stored, so that it is possible to regulate the amount of products supplied to the transport section by the supply stop section. Moreover, when the products are supplied by the supply stop section from the product supply section to the transport section, the supply stop section moves away from the aperture, therefore the products stored in the product supply section can easily move out of the product supply section from between the aperture and the supply stop section. Furthermore, by oscillating the supply stop section, at least some of the products on the supply stop section are moved toward the transport section so that the products are not supplied all at once, and it is possible to supply the products while adjusting the amount of products supplied.

In this product transport apparatus, it is preferable that the transport section transports the products in a circumferential direction given by a circular circumference, and that the supply stop section is provided positioned in the center of the circular circumference.

With such a product transport apparatus, the supply stop section is arranged in the center of the circular circumference of the transport section that transports the products in the circumferential direction, therefore the products can be supplied substantially evenly to all regions in the circumferential direction, in which the products are transported.

In this product transport apparatus, it is preferable that the product supply section is provided with the aperture below a storage section that can store the products, and that the products are supplied to the transport section by dropping them from the aperture..

With such a product transport apparatus, the aperture is provided below the storage section capable of storing the products, thus the stored products move to the aperture and drop from the aperture by their own weight and are supplied to the transport section. Therefore, it is possible to supply the products of the product supply section to the transport section without using any driving force.

In this product transport apparatus, it is preferable that the supply stop section narrows a space linking the storage section and the transport section when the supply stop section comes close to the aperture, and the supply stop section widens the space when the supply stop section moves away from the aperture..

With this product transport apparatus, it becomes possible that products are not supplied from the storage section if the supply stop section is close to the aperture, and products are supplied if the supply stop section moves away from the aperture.

In this product transport apparatus, it is preferable that the supply stop section includes a placement section on which the products that have dropped from the aperture can be placed, and that the products are supplied to the transport section after having been placed on the placement section..

With this product transport apparatus, the products dropped from the aperture are temporarily placed on the placement section of the supply stop section, and are supplied to the transport section by oscillating the supply stop section, so that the products stored in the product supply section are not directly supplied to the transport section.. Therefore, the products are not supplied all at once to the transport section, so it is possible to prevent supplying an excessive amount of products to the transport section.

In this product transport apparatus, it is preferable that the placement section is provided with an inclination whose height decreases towards an edge portion.

With such a product transport apparatus, the placement section is provided with an inclination whose height decreases towards the edge portion, therefore it is possible to achieve a configuration in which the products placed on the placement section easily move in the direction of the edge portion, and are easily supplied to the transport section that is located outside the placement section.

In this product transport apparatus, it is preferable that when the supply stop section contacts the transport section when the supply stop section moves away from the aperture, and oscillates by receiving oscillations from the transport section.

With such a product transport apparatus, it is not necessary to provide a separate driving section in addition to the driving section for applying oscillations to the transport section, in order to apply oscillations to the supply stop section.. Therefore, an inexpensive product transport apparatus can be realized without making the product transport apparatus into large size.

It is preferable that this product transport apparatus includes a detector that detects the products on the transport section, and a controller that controls a position of the supply stop section based on a detection result of the detector..

With such a product transport apparatus, the position of the supply stop section is controlled based on the result of detecting the products on the transport section with the detector, so that it is possible to adjust the amount of products supplied from the product supply section in accordance with the products on the transport section..

In this product transport apparatus, it is preferable that the supply stop section does not contact against the aperture

With such a product transport apparatus, the supply stop section does not contact against the aperture from which the products are supplied, therefore it is possible to prevent the products that are remaining on the supply stop section from being damaged by being clamped between the aperture and the supply stop section.

In this product transport apparatus, it is preferable that the supply stop section comes close to or moves away from the aperture by air that is supplied to a location below the supply stop section.

With such a product transport apparatus, the supply stop section can be easily moved in the vertical direction by supplying air to a location below the supply stop section, and it is possible to easily realize a mechanism that brings the supply stop section close to or removes it from the aperture.

In this product transport apparatus, it is preferable that this product transport apparatus further includes a position adjustment mechanism for adjusting the position of the supply stop section when the supply stop section has moved close to the aperture.

With this product transport apparatus, it is possible to adjust the position of the supply stop section when the supply stop section has been brought close to the aperture by the position adjusting mechanism, therefore the spacing between the aperture and the supply stop section can be adjusted. Therefore, it is possible to maintain the supply state of the products, even for products of different sizes, in a proper state. Thus, it is possible to use a single product transport apparatus as an apparatus for transporting a plurality of kinds of products of different sizes, and a product transport apparatus of high versatility can be realized.

### Configuration of the Apparatus

The following is an explanation of an embodiment of the present invention as shown in the figures..

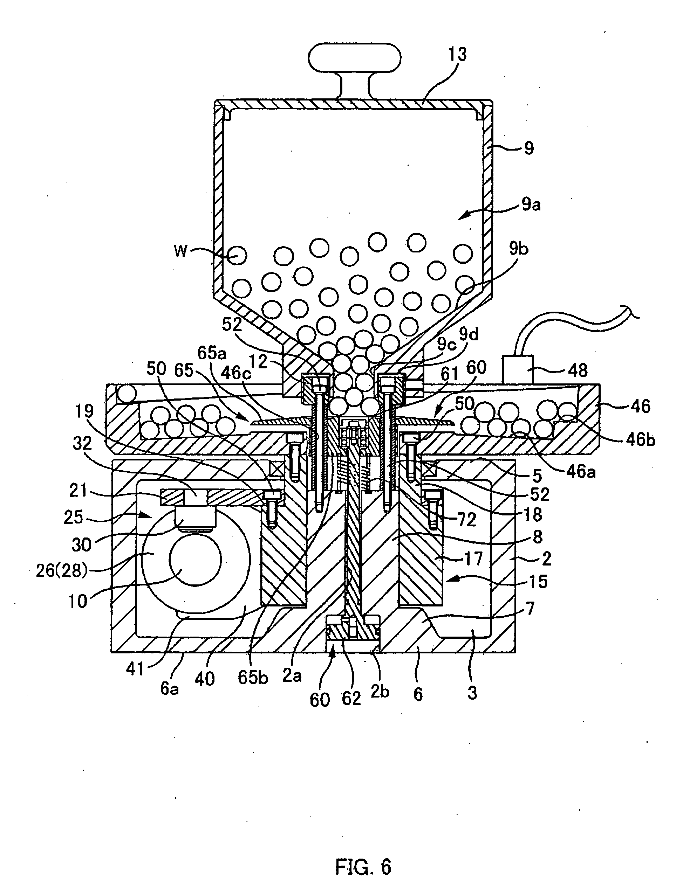

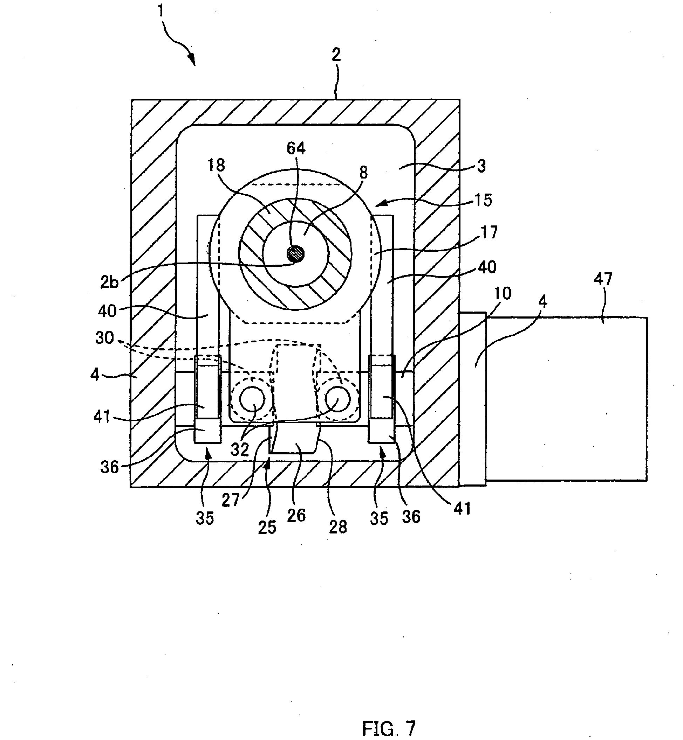

Fig.. 1 is a plan view showing an entire product transport apparatus according to the present embodiment.. Fig.. 2 is a front view of the product transport apparatus shown in Fig.. 1. Fig.. 3 is a lateral view of the product transport apparatus shown in Fig.. 1. Fig.. 4 is a cross-sectional view of the internal structure seen from the front side. Fig.. 5 is a cross-sectional view of the internal structure seen from the lateral side.. Fig. 6 is a cross-sectional view for illustrating a supply stop mechanism.. Fig. 7 is a top cross-sectional view showing the internal structure.

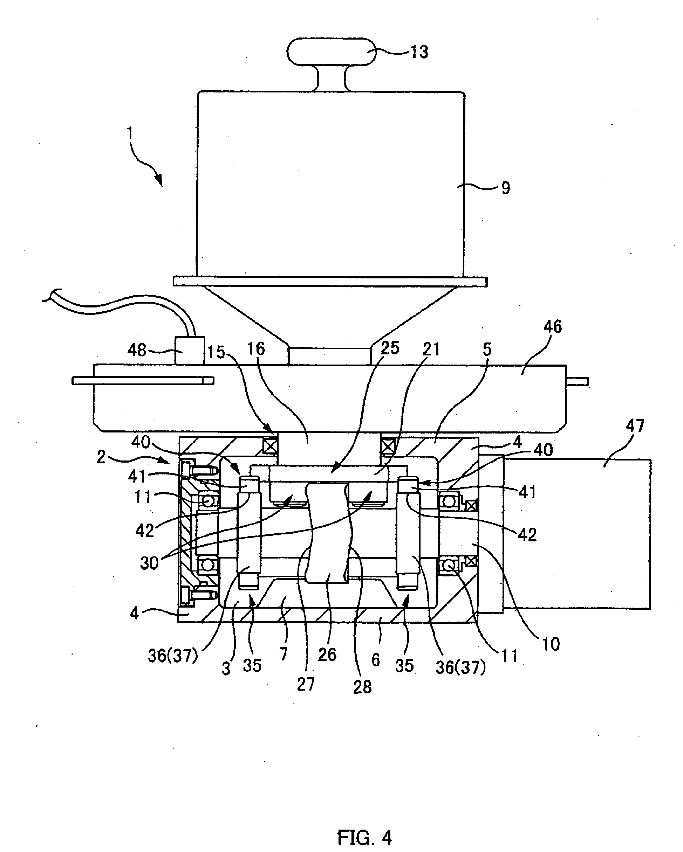

As shown in Figs. 4 to 6, the product transport apparatus 1 of this embodiment includes a housing 2, an input shaft 10 provided rotatably in the housing 2, a turret 15 serving as an output section that is provided such that it can swing and reciprocate in the housing 2, a first cam mechanism 25 that is coupled to the input shaft 10 and lets the turret 15 swing, a second cam mechanism 35 that is coupled to the input shaft 10 and lets the turret 15 reciprocate up and down, a bowl 46 serving as a product transport section that swings and reciprocates together with the turret 15, a hopper 9 serving as a product supply section having a storage section 9a for supplying workpieces W, which serve as the products, to the bowl 46, and a supply stop mechanism 60 (see Fig. 6) for stopping the supply of the workpieces W from the hopper 9.

As shown in Figs.. 4 to 7, the housing 2 is box-shaped and has an airtight void 3 inside.. The void 3 of the housing 2 has a substantially rectangular shape when viewed from above, as shown in Fig. 7, and the input shaft 10 is provided horizontally and rotatably, in a direction perpendicular to the longitudinal direction at a position that is shifted from the middle in the longitudinal direction of the rectangle.. In the space of the void 3 of the housing 2 on the side that the input shaft 10 is not arranged, the turret 15 which extends in the vertical direction is arranged such that it can swing in the circumferential direction within the horizontal plane and reciprocate up and down in the vertical direction. The first cam mechanism 25 and the second cam mechanism 35 are arranged between the turret 15 and the input shaft 10.

As shown in Fig.. 4, the input shaft 10 is provided along a direction that is perpendicular to the longitudinal direction of the housing 2, and is supported rotatably by a pair of bearings 11 between side walls 4 opposing each other.. One end portion of the input shaft 10 protrudes out of the housing 2 through one of the side walls 4, and is coupled to the drive shaft (not shown in the drawings) of a drive motor 47 that is attached to the outer surface of the housing 2 where the input shaft 10 protrudes. Moreover, it is configured so that the input shaft 10 is rotatively driven via the drive shaft by the driving of the drive motor 47.

As shown in Fig.. 6, a frustum-shaped pedestal 7 and a columnar support shaft 8 standing vertically in the center of the pedestal 7 are arranged in one piece at the bottom section 6 in the void 3 of the housing 2.. The turret 15 is configured such that it can swing in the circumferential direction and reciprocate in the vertical direction, while its horizontal position is maintained by the support shaft 8. A through hole 2a is provided in an axial direction through the center of the pedestal 7 and the support shaft 8, and a circular depression 2b, whose height is lower than the height of the pedestal 7, is arranged in the bottom surface 6a of the housing 2, the circular depression 2b being formed concentric with the through hole 2a and extending inward. Amovable member 62, which is described later, of the supply stop mechanism 60 is provided in the through hole 2a and the circular depression section 2b, such that it can move in the axial direction,.

As shown in Figs. 4 to 7, the turret 15 is arranged inside the void 3 such that it can swivel around the support shaft 8 and reciprocate in the vertical direction. The turret 15 has a configuration of a hollow cylindrical shape, with its upper end portion protruding slightly out of the housing 2 from an upper lid section 5 of the housing 2.

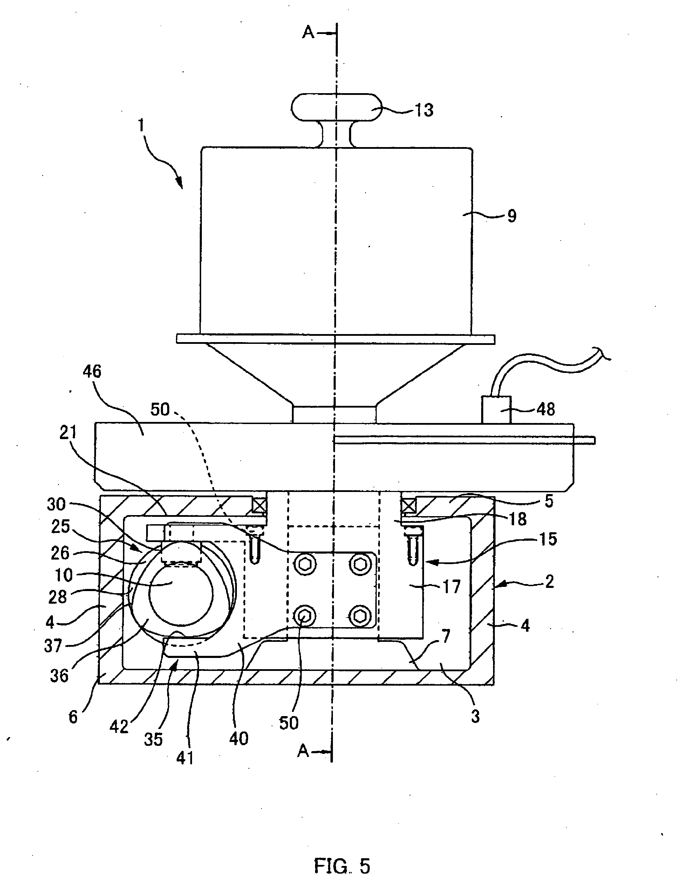

As shown in Figs. 5 and 6, the outer circumferential surface of the turret 15 is provided with two stages, namely a large diameter section 17 and a small diameter section 18, and it is arranged so that the inner circumferential surface can slide with respect to the outer circumferential surface of the support shaft 8 and swing in the circumferential direction.. The upper end portion of the small diameter section 18 of the turret 15 protrudes out of the housing 2 through the upper lid section 5 of the housing 2, and the bowl 46 is attached in one piece with bolts 50 to the end surface of this protruding portion..

The bowl 46 has a hollow cylindrical shape with a bottom section 46a, and a transport path 4 6b having a spixal-shaped inclination extending upward from the bottom surface 46a of the bowl 46 along the inner circumferential surface.. A portion of the side wall of this transport path 46b is provided with a gate (not shown in the drawings) leading from the inside to the outside.. An opening 46c into which a supply stop section 65 of the supply stop mechanism 60 which is described later is inserted is arranged in the center of the bottom section 46a of the bowl 46. Moreover, the bowl 46 is provided with a sensor 48 serving as a detector for detecting workpieces W that are transported on the transport path 46b. The sensor 48 can detect the presence or absence of a workpiece W on the transport path 46b at the position where the sensor 48 is arranged, and sends detection information to a controller 70 which is described later.

The hopper 9, which is arranged above the bowl 46, is a substantially hollow-cylindrical container having a bottom section 9b.. The diameter of the bottom section 9b becomes increasingly smaller in the downward direction, and a workpiece supply hole 9c serving as an opening for supplying the workpieces W stored in the hopper 9 to the bowl 46 is provided in the center of the bottom section 9b. The lower end portion of the hopper 9 is provided with a thick wall surrounding the workpiece supply hole 9c, and a ring-shaped groove section 9d that is concentric with the workpiece supply hole 9c is formed in this thick portion. A ring-shaped support member 12, which is described later, supported by the support shaft 8 is fitted to the ring-shaped groove section 9d. Moreover, a lid 13 that can be opened and closed is arranged in the aperture at the top of the hopper 9..

A step portion 19, which is a circular ring-shaped flat surface that is perpendicular to the axis of the turret 15 is formed at the border section between the large diameter section 17 and the small diameter section 18 of the turret 15. First contact elements 30, which are structural components of the first cam mechanism 25 described later, are attached in one piece via a swing arm 21 to this step portion 19.. Second contact elements 40, which are structural components of the second cam mechanism 35 described later, are attached in one piece to the outer circumferential surface of the large diameter section 17 of the turret 15.

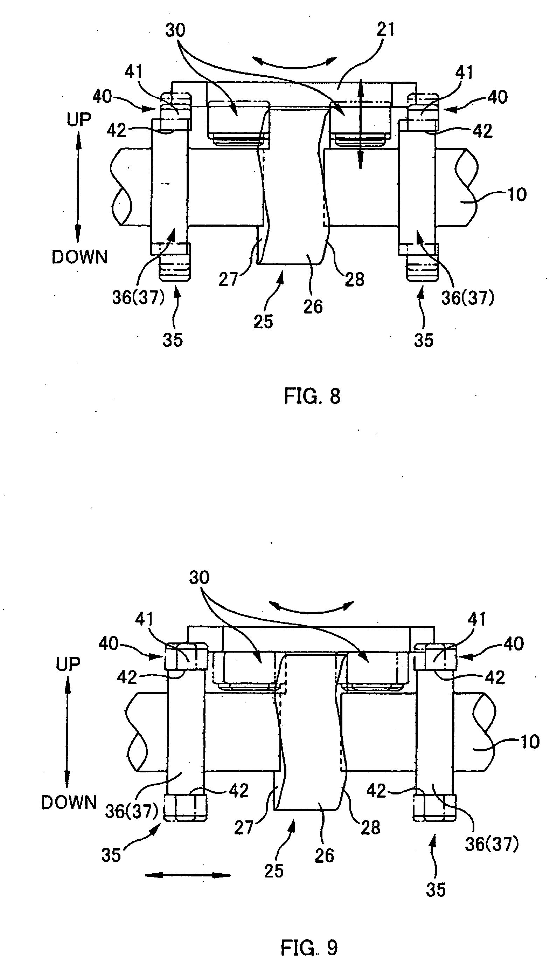

Fig. 8 is a diagram illustrating the operation of the second cam mechanism.. Fig.. 9 is a diagram illustrating the operation of the first cam mechanism..

As shown in Figs. 4 to 7, the first cam mechanism 25 includes a first cam 26 that is provided in one piece with a center portion of the input shaft 10 and is rotatively driven integrally with the input shaft 10, and a pair of first contact elements 30 engaging the first cam 26. Due to the cooperation of the first cam 26 and the pair of first contact elements 30, the turret 15 and the bowl 46 swing horizontally and in the circumferential direction.

The first cam 26 is constituted by a circular plate-shaped rib cam that is provided with a first cam face 27 extending all the way around one lateral surface and a second cam face 28 extending all the way around the other lateral surface.. The first cam face 27 and the second cam face 28 are curved with respect to the axial direction of the input shaft 10, and are formed as curved faces that extend perpendicularly from the outer circumferential surface of the input shaft 10. The first cam face 27 and the second cam face 28 are provided with the same curved surface.

The pair of first contact elements 30 is attached in one piece to the turret 15 via the swing arm 21. The swing arm 21 has a substantially rectangular plate shape, and its other end portion in the longitudinal direction is attached to the step portion 19 of the turret 15 with bolts 50, so that its one end portion in the longitudinal direction opposes the first cam 26 in the vertical direction at a predetermined spacing.. The other end portion in the longitudinal direction of the swing arm 21 is formed to a circular shape whose outer shape has generally the same diameter as the large diameter section 17 of the turret 15, and a hole through which the small diameter section 18 of the turret 15 is passed is formed in the center portion of this circular section.. The other end portion in the longitudinal direction of the swing arm 21 is fastened with bolts 50 to the step portion 19 of the turret 15 with the small diameter section 18 being passed through this hole..

At the lower surface side of the one end portion of the swing arm 21, the pair of first contact elements 30 is attached via swivel shafts 32 attached by screws or the like, such that there is a predetermined spacing between them in the horizontal direction (the axial direction of the input shaft 10) and each of their axes are in the vertical direction (the direction perpendicular to the axis of the input shaft 10).

As shown in Fig.. 9, the spacing between each of the contact elements 30 in the horizontal direction is adjusted such that the circumferential surface of one contact element 30 is in constant contact with and can roll along the first cam face 27 of the first cam 26, and the circumferential surface of the other contact element 30 is in constant contact with and can roll along the second cam face 28.

When the input shaft 10 is rotatively driven by the driving of the drive motor 47, the first cam 26 is rotatively driven integrally with the input shaft 10, and each of the contact elements 30 roll on the first cam face 27 and on the second cam face 28 of the first cam 26, while maintaining a state of contact, as shown in Fig.. 9.. In this situation, the swing arm 21 swings in the horizontal direction with the axis of the support shaft 8 in the center, in accordance with the shape of the curved surfaces of the first cam face 27 and the second cam face 28, and the turret 15 and the bowl 46 swing in the same direction via the swing arm 21..

The pair of contact elements 30 is configured such that the spacing between them is adjustable, and by adjusting the spacing between the pair of contact elements 30, it is possible to adjust the contact pressure between both of the contact elements 30 and the first cam face 27 and the second cam face 28 of the first cam 26 to a predetermined value, and create a compression state in which backlash does not occur..

As shown in Figs. 4 and 5, the second cam mechanism 35 is arranged on the input shaft 10 further outside in the axial direction than the first cam 26, and includes a pair of second cams 36 that are rotatively driven together with the input shaft 10 and a pair of second contact elements 40 that respectively engage with each of the second cams 36.. As shown in Fig.. 8, it can reciprocate the turret 15 and the bowl 46 in the up and down direction (in the vertical direction) by the cooperation of the second cams 36 and the pair of second contact elements 40.

Each of the second cams 36 are plate cams whose outer circumferential surfaces are provided with cam faces 37. The cam faces 37 are provided with a sequence of curved surfaces whose distance from the axial center in the direction perpendicular to the axis of the input shaft 10 changes, and are flat with respect to the axial direction of the input shaft 10. Each of the second contact elements 40 are in constant contact with the cam surfaces 37 of the second cam..

As shown in Fig.. 5, each of the second contact elements 40 is a plate-shaped element with a U-shaped engagement section 41 at one end portion.. As shown in Figs. 4 and 8, the two contact elements 40 are attached at their other end portion side respectively to the outer circumferential surface of the large diameter section 17 of the turret 15 with bolts 50, such that the contact elements 40 are spaced apart at a predetermined spacing in the horizontal direction (the axial direction of the input shaft 10) and are arranged parallel to each other.

Each of the second contact elements 40 is arranged such that the open portion of the U-shaped engagement section 41 is facing the lateral direction, and is formed such that the locations of the engagement sections 41 contacting the cam faces 37 of the second cams 36 are spaced apart at a distance in the vertical direction and are parallel to each other.. Moreover, the inner faces 42 of the engagement sections 41 are in constant contact with the cam faces 37 of the second cams 36.

In this product transport apparatus 1, when the input shaft 10 is rotated by driving the drive motor 47, the first cam 26 of the first cam mechanism 25 and the second cams 36 of the second cam mechanism 35 rotate together with the input shaft 10.. As shown in Fig. 9, by cooperation of the first cam 26 of the first cam mechanism 25 with the first contact elements 30, the turret 15 and the bowl 46 swing horizontally and in the circumferential direction, and as shown in Fig. 8, by cooperation of the second cams 36 of the second cam mechanism 35 with the second contact elements 40, the turret 15 and the bowl 46 reciprocate in the up and down direction, and the workpieces W on the bowl 46 are transported in the circumferential direction by oscillation.. In this embodiment, the drive motor 47, the first cammechanism 25 and the second mechanism 35 correspond to a driving section.

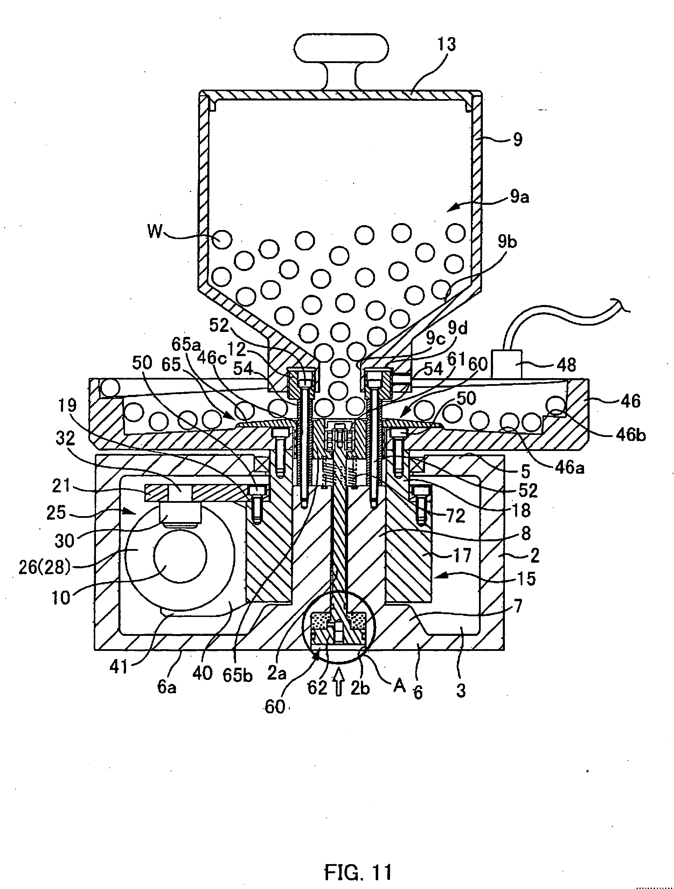

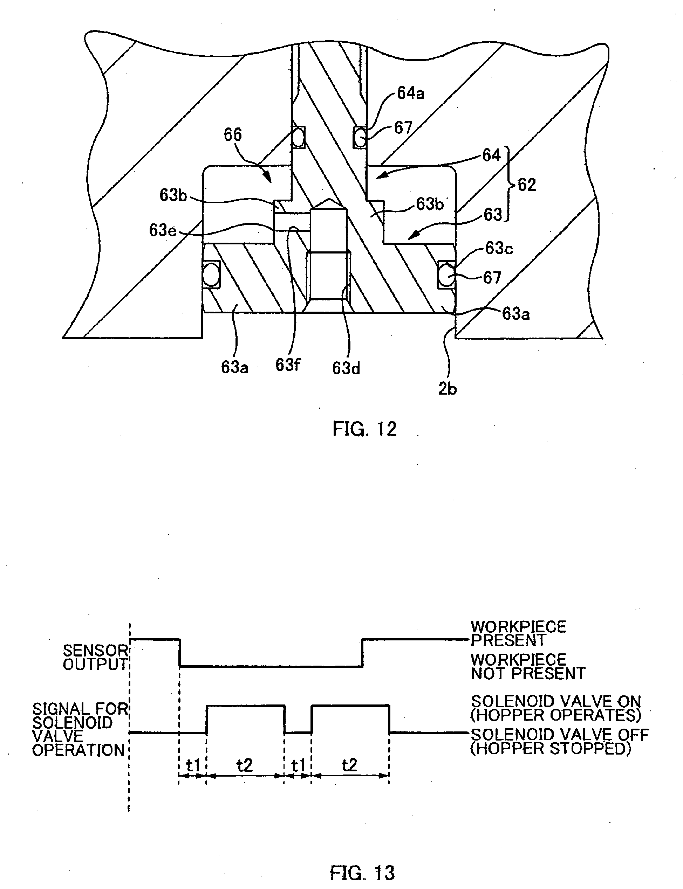

Fig.. 10 is a block diagram showing the configuration for controlling the supply stop mechanism.. Fig.. 11 is a diagram illustrating the state in which the workpieces W are supplied from the hopper. Fig. 12 is a detailed view of the region A in Fig. 11.

As shown in Figs.. 11 and 12, the supply stop mechanism 60 includes the movable member 62, a supply stop section 65, an air source 69 for supplying air for moving the movable member 62, a solenoid valve 68 for regulating the supply of air, and a controller 70 for controlling the stop position of the supply stop section 65 by controlling the solenoid valve 68. The movable member includes a circular disk-shaped piston section 63 and a rod section 64 extending perpendicularly from the center on one side of the piston section 63, the circular disk-shaped piston section 63 and the rod section 64 being arranged in the through hole 2a and the circular depression section 2b of the housing 2.. The supply stop section 65 is inserted through the opening 46c in the bowl, shutting the opening 46c from above, and can be moved in the vertical direction.. In this embodiment, the product transport apparatus includes the air source 69, the solenoid valve 68, and the controller 70. However, the air source 69, the solenoid valve 68, and the controller 70 do not necessarily need to be included in the product transport apparatus.

The piston section 63 is a circular disk-shaped component provided with a step portion formed by a large diameter section 63a and a small diameter section 63b. The outer shape of the small diameter section 63b is formed larger than the outer diameter of the rod section 64, and the rod section 64 extends from the side of the small diameter section 63b. The outer shape of the large diameter section 63a is formed slightly smaller than the inner diameter of the circular depression section 2b of the housing 2. A groove section 63c is provided extending in the circumferential direction of the outer circumferential surface of the large diameter section 63a, and a ring-shaped rubber member 67 serving as a sealing material is provided in the groove section 63c.

The air supply hole 63d is provided at the center portion on the side of the large diameter section 63a of the piston section 63, extending toward the rod section 64 side, and the air supply hole 63d is connected to a connection hole 63f arranged in the radial direction in the small diameter section 63b and having an opening 63e in the circumferential surface. Moreover, the air supply hole 63d is connected to the air source 69 via the solenoid valve 68. When the solenoid valve 68 is turned on by the controller 70, air is supplied to the air supply hole 63d, and when the solenoid valve 68 is turned off by the controller 70, the supply of air from the air supply hole 63d is blocked..

The rod section 64 is formed such that when the movable member 62 is inserted from the bottom surface side of the housing 2 into the through hole 2a and the circular depression section 2b, it protrudes upward from the upper surface of the housing 2, and reaches the opening 46c of the bowl 46 provided above. The outer diameter of the portion of the rod section 64 on the side of the piston section 63 is formed to be slightly smaller than the through hole 2a of the housing 2. In the outer circumferential surface of the rod section 64, a groove section 64a is provided in the circumferential direction and a ring-shaped rubber member 67 serving as a sealing material is provided inside this groove section 64a. Therefore, when the movable member 62 is inserted into the through hole 2a and the circular depression section 2b of the housing 2, an airtight space 66 is formed within the through hole 2a and the circular depression section 2b. The airtight space 66 is kept airtight by the ring-shaped rubber member 67 disposed in the piston section 63 and the ring-shaped rubber member 67 disposed in the rod section 64. The connection hole 63f arranged in the small diameter section 63b operatively connects the airtight space 66 and the air supply hole 63d. Therefore, when the air is supplied to the air supply hole 63d, the air flows into the airtight space 66, and the airtight space 66 is expanded by the air that has flowed into it, and the piston section 63 (movable member 62) is pushed downward, as shown in Figs. 11 and 12.

The supply stop section 65 includes a circular disk-shaped placement section 65a onto which the workpieces W are placed on its upper side, and a tubular section 65b that is inserted into the opening 46c of the bowl 46 on its lower side. The outer diameter of the placement section 65a is sufficiently larger than the opening 46c of the bowl 46, and it is provided with an inclination, so that it becomes slightly lower from the center towards its outer circumferential edge side. The outer diameter of the tubular section 65b is formed slightly smaller than the opening 46c of the bowl 46, and the movable section 62 and the supply stop section 65 that is coupled through a bearing 61 to the end portion of the rod section 63 inserted into the tubular section 65b are configured such that they can swivel with respect to each other.

The lower end portion of the tubular section 65b and the upper end portion of the support shaft 8 of the housing 2 oppose each other at a certain spacing in the vertical direction, and a compression spring 72 is arranged between the lower end portion of the tubular section 65b and the upper end portion of the support shaft 8 of the housing 2. Therefore, the supply stop section 65 is biased upward by the compression spring 72, and is positioned by the small diameter section 63b of the movable member 62 coupled to the supply stop section 65 contacting against the housing 2 inside the circular depression section 2b. In this situation, the spacing between the lower surface of the hopper 9 in which the workpiece supply hole 9c is provided and the supply stop section 65 is such that a continuous space of such an extent that the stored workpieces W do not pass through is provided, and the lower surface of the hopper 9 does not contact against the supply stop section 65.

Moreover, the supply stop section 65 is provided with four insertion holes through which support screws 52 for supporting the hopper 9 are inserted that pass through the tubular section 65b in the vertical direction.. The tip end side of the support screws 52 inserted respectively through the four insertion holes are threadedly engaged to the upper end portion of the support shaft 8. Moreover, a ring-shaped support member 12 to which the hopper 9 is fastened is fitted on the side of the screw heads of the four support screws 52 positioned above the supply stop section 65, and are fastened by screws (not shown in the drawings) that are threadedly engaged from the lateral direction. Each of the support screws 52 is covered by tubular elastic members 54 between the lower end portion of the tubular section 65b and the upper end portion of the support shaft 8 of the housing 2.

Fig. 13 is an example of a timing chart illustrating the operation of the supply stop mechanism.

As shown in Fig.. 13, in a state in which a signal indicating that workpieces W are continuously transported, as the detection information of the sensor 48, is output to the controller 70, the supply stop section 65 of the supply stop mechanism 60 is pushed upward by the compression spring 72, and the space linking the storage section 9a to the inside of the bowl 46 becomes narrow, so that the supply of workpieces W from the hopper 9 is stopped..

And when the workpieces W inside the bowl 46 decrease, there is an interruption in the workpieces W on the transport path 46b, that is, no workpiece W is present in the detection range of the sensor 48 on the transport path 64, and by detecting that the signal indicating that the workpieces W are transferred continuously is not output to the controller 70, the controller 70 turns on the solenoid valve 68 for a predetermined time t2, and air is supplied to the air supply hole 63d of the piston section 63 of the movable member 62. The airtight space 66 is widened by the supplied air, so that the supply stop section 65 is pushed downward together with the movable member 62, the space linking the storage section 9a to the inside of the bowl 46 is widened, and the workpieces W are supplied from the workpiece supply hole 9c of the hopper 9 to the bowl 46.. At this time, the placement section 65a is oscillated by contacting the lower surface of the placement section 65a of the supply stop section 65 that is pushed down against the upper surface of the bowl 46. The workpieces W that are supplied from the hopper 9 and placed on the placement section 65a are transported in the circumferential direction of the bowl 46, while being subjected to the oscillations of the placement section 65a and gradually being moved in the circumferential direction of the bowl 46 along the inclination of the placement section 65a.

The controller 70 continues to detect the signal from the sensor 48, and when it detects that a signal indicating that the workpieces W are continually transported is not output to the controller 70, even though the predetermined time t2 for which the solenoid valve 68 is turned on by a single operation signal has elapsed, the controller 70 outputs an operation signal for turning on the solenoid valve 68 again for a predetermined time t2 so that air is supplied to the air supply hole 63d of the piston section 63 of the movable member 62. Afterwards, the controller 70 repeats the operation of supplying air by turning on the solenoid valve 68 for a predetermined time t2 until detecting that a signal indicating, as the detection information of the sensor 48, that the workpieces W are transported continuously is output to the controller 70, and when it detects that a signal indicating that the workpieces W are transported continuously has been output to the controller 70, the controller 70 maintains the solenoid valve 68 in an off state. Here, the time t1 in Fig. 13 indicates the time lag from the time when the operation signal for operating the solenoid valve 68 has been output based on the change in the signal of the sensor 48 until the solenoid 68 operates.

With the product transport apparatus 1 of this embodiment, the supply stop section 65 is provided, with which the supply of the workpieces W from the workpiece supply hole 9c of the hopper 9 in which the workpieces W are stored can be stopped.. If the supply stop section 65 is brought close to the supply hole 9c, the workpieces W are not supplied from the storage section 9a, whereas if the supply stop section 65 moves away from the supply hole 9c, the workpieces W can be supplied, so the amount of the workpieces W that are supplied to the bowl 46 can be adjusted with the supply stop section 65..

Also, the workpiece supply hole 9c is arranged below the storage section 9a in which the workpieces W are stored, so the stored workpieces W move to the workpiece supply hole 9c and drop from the workpiece supply hole 9c by their own weight, and are supplied to the bowl 46, and thus, the workpieces W in the hopper 9 can be supplied to the workpiece stop section 65 without using a driving force.

Also, when the workpieces W are supplied from the hopper 9 to the bowl 46, the supply stop section 65 moves away from the workpiece supply hole 9c so that the workpieces W that are stored in the hopper 9 can easily move to outside the hopper 9 from between the workpiece supply hole 9c and the supply stop section 65. Moreover, the workpieces W that have dropped from the supply hole 9c are once placed on the placement section 65a of the supply stop section 65, and are supplied to the bowl 46 by oscillation of the supply stop section 65, so that the workpieces W stored in the hopper 9 are not directly supplied to the bowl 46, and therefore, it is possible to prevent the workpieces W from being supplied to the bowl 46 all at once..

At this time, the supply stop section 65 contacts the bowl 46 when being removed from the workpiece support hole 9c, and by receiving the oscillations of the bowl 46, the supply stop section 65 oscillates, therefore it is not necessary to provide a separate driving section for applying oscillations to the supply stop section 65. Therefore, it is possible to realize an inexpensive product transport apparatus 1, without making the product transport apparatus 1 large.

Moreover, the supply stop section 65 is arranged at the center of the circular circumference of the bowl 46 that transports the workpieces W in the circumferential direction, and therefore it is possible to supply workpieces W substantially evenly to the entire region in the circumferential direction in which workpieces are transported..

Furthermore, the placement section 65a is provided with an inclination so that its height decreases towards the edge portion, and therefore a configuration can be realized with which the workpieces W placed on the placement section 65a are easily supplied to the bowl 46..

Moreover, with the product transport apparatus 1 of this embodiment, it is possible to adjust the amount of workpieces W that are supplied from the hopper 9 in accordance with the amount of workpieces W inside the bowl 46, since the position of the supply stop section 65 is controlled based on the result of detecting the workpieces W of the bowl 46 with the sensor 48..

Furthermore, the supply stop section 65 does not contact against the workpiece supply hole 9c through which workpieces W are supplied, so the workpieces W remaining on the supply stop section 65 can be prevented from being clamped between the workpiece supply hole 9c and the supply stop section 65 and damaged.

Moreover, with the product transport apparatus 1 according to this embodiment, it is easy to move the supply stop section 65 in the vertical direction by supplying air to a location below the supply stop section 65, and it is easy to realize a supply stop mechanism 60 in which the supply stop section 65 comes close to or removes it from the workpiece supply hole 9c.

In the product transport apparatus 1 of this embodiment described above, the stop position of the supply stop section 65 when the supply stop section 65 is lifted, that is, when the supply of the workpieces W from the hopper 9 is stopped is constant, however by making it possible to adjust the stop position of the supply stop section 65, it becomes possible to supply a suitable amount of workpieces to the bowl 46 even when the products are workpieces of different sizes, for example.. Here, an example of a product transport apparatus 80 that is provided with a stop position adjusting mechanism 82 with which the stop position of the supply stop section 65 can be adjusted is described. In the following, components with the same configuration as in the foregoing embodiment are assigned the same reference numerals and explanations thereof are omitted..

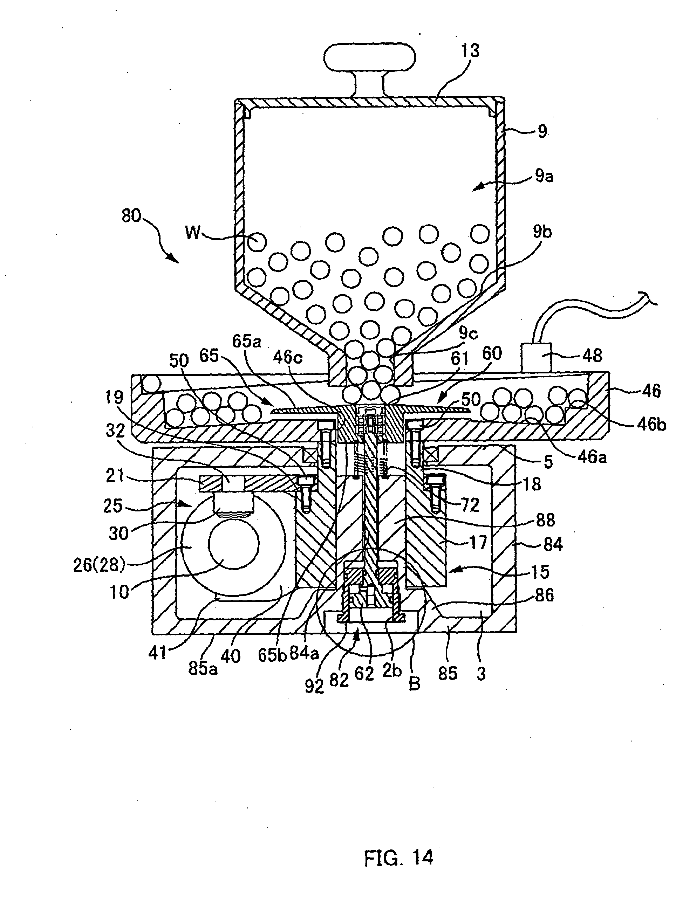

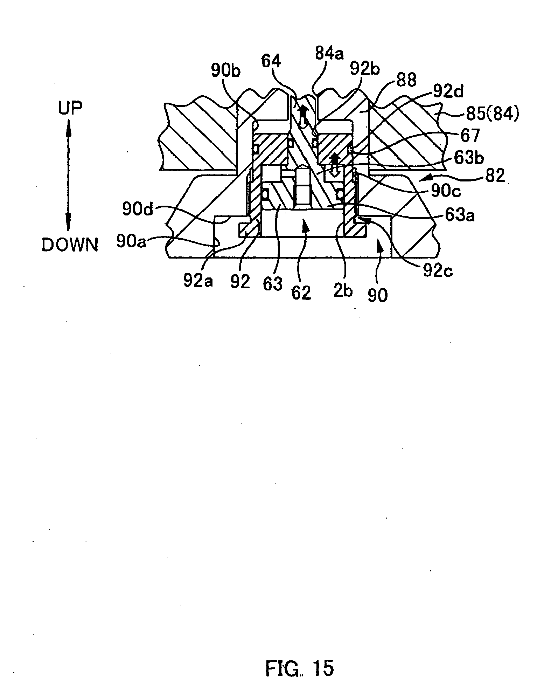

Fig. 14 is a cross-sectional view of a product transport apparatus provided with a stop position adjusting mechanism for adjusting the stop position of the supply section.. Fig. 15 is a detailed view of the portion B in Fig. 14.

In the stop position adjustment mechanism 82, a position adjustment depression section 90 that is larger than the circular depression section 2b is provided in the bottom section 6 of the housing 2 in the above-described embodiment, and an adjustment member 92 is interposed between the position adjustment depression section 90 and the movable member 62.

To explain this in more detail, also at the bottom section 85 of the housing 84 of the product transport apparatus 80 including this stop position adjustment mechanism 82, a pedestal section 86 and a support shaft 88 are provided.. A through hole 84a is provided so that it passes through the center of the pedestal section 86 and the support shaft 88 in the axial direction, and at the bottom surface 85a of the housing 84, the position adjustment depression section 90 that is formed concentrically with the through hole 84a and extends inward, from the pedestal section 86 to the support shaft 88 is provided.

The stop position adjustment mechanism 82 includes the position adjustment depression section 90 with which the housing 84 is provided, the movable member 62 made of the piston section 63 and the rod section 64, and the adjustment member 92 that is interposed between the position adjustment depression section 90 and the movable member 62.

The adjustment member 92 is a substantially circular columnar member, with a brim section 92a that protrudes in the radial direction all around the lower end portion facing downward when the adjustment member 92 is installed in the housing 84. Moreover, a circular depression section 2b is provided upward in the lower surface of the adjustment member 92, and an insertion hole 92b through which the rod section 64 of the movable member 62 is inserted is provided in the center of the adjustment member 92 in the axial direction, passing through from the circular depression section 2b in the vertical direction.. Moreover, on the outer circumferential surface of the adjustment member 92, a male thread 92c is formed at a downward side from about its middle in the axial direction. And at the upward side, a groove section 92d is formed in the circumferential direction on the smooth circumferential surface of the adjustment member 92, and a ring-shaped rubber member 67 is provided inside the groove section..

The position adjustment depression section 90 provided in the housing 84 includes a large diameter depression section 90a provided on the bottom surface side of the housing 84 and a small diameter depression section 90b formed above the large diameter depression section 90a.. The inner diameter of the small diameter depression section 90b is formed slightly larger than the outer diameter of the adjustment member 92, and the inner circumferential surface on the side of the large diameter depression section 90a is formed a female thread 90c into which the male thread 92c of the adjustment member 92 can threadedly engage.. The depth of the small diameter depression section 90b is formed such that when the adjustment member 92 is threadedly engaged to the small diameter depression section 90b, the brim section 92a contacts against the step portion 90d of the position adjustment depression section 90 while the upper surface of the adjustment member 92 does not collide with the small diameter depression section 90b. Moreover, the depth of the larger diameter depression section 90a is formed such that the lower surface of the adjustment member 92 does not protrude downward than the lower surface of the housing 84, even when the adjustment member 92 threadedly engaged to the small diameter depression section 90b is in its lowest position.

Then, when the adjustment member 92 is threadedly engaged to the position adjustment depression section 90 of the housing 84, the position of the circular depression section 2b that is formed in the adjustment member 92 is determined by moving up and down in the vertical direction in accordance with the inserted amount of the adjustment member 92. Accordingly, it is possible to set, through the amount by which the adjustment member 92 is threadedly engaged to the position adjustment depression section 90, the stop position of the movable member 62 whose stop position is determined by the position of the circular depression section 2b, and the stop position of the supply stop section 65 which is provided to the movable member 62. Therefore, if the products are of small size, the adjustment member 92 is threadedly engaged by a large amount into the position adjustment depression section 90, in order to set a narrow space linking the workpiece supply hole 9c with the supply stop section 65, and the adjustment member 92 is inserted to a deep position.. On the other hand, if the products are of large size, the adjustment member 92 is threadedly engaged by a small amount into the position adjustment depression section 90, in order to set a wide space linking the workpiece supply hole 9c with the supply stop section 65, and the insertion amount of the adjustment member 92 is made small.

With the product transport apparatus 80 of this embodiment, it is possible to adjust the position of the supply stop section 65 with the stop position adjustment mechanism 82 when the supply stop section 65 has been brought close to the workpiece supply hole 9a, therefore it is possible to adjust the spacing between the workpiece supply hole 9a and the supply stop section 65. Therefore, even when the products are workpieces W of different sizes for example, it is possible to store them in the hopper 9 and to supply them to the bowl 46.. Accordingly, it is possible to use one product transport apparatus 80 as an apparatus for transporting a plurality of types of products of different sizes, and a product transport apparatus 80 of great versatility can be realized.

### Other Embodiments

In the foregoing, embodiments of the present invention were explained, but the present invention is not limited to these embodiments, but may be modified as described in the following.

In the foregoing embodiments, the solenoid valve 68 is turned on for a predetermined time t2 by letting the controller 70 output an operation signal based on a signal from the sensor 48, but there is no limitation to this.. For example, it is also possible to turn on the solenoid valve 68 while detecting that a signal indicating that workpieces W are continuously transported is not output to the controller 70..

Moreover, in the foregoing, the amount of workpiece W within the bowl 46 is detected by the sensor 48, and based on the detection result, the position of the supply stop section 65 is moved by operating the solenoid valve 68 under the control of the controller 70 and the workpieces W are supplied, however, there is no limitation to this.. And it is also possible that an operator operates the solenoid valve 68 in accordance with the amount of the workpieces W in the bowl 46.

Moreover, in the above-described embodiments, the movable member 62 is moved by air, but there is no limitation to this, and it is also possible that the movable member 62 is moved using a motor or a magnet or the like..

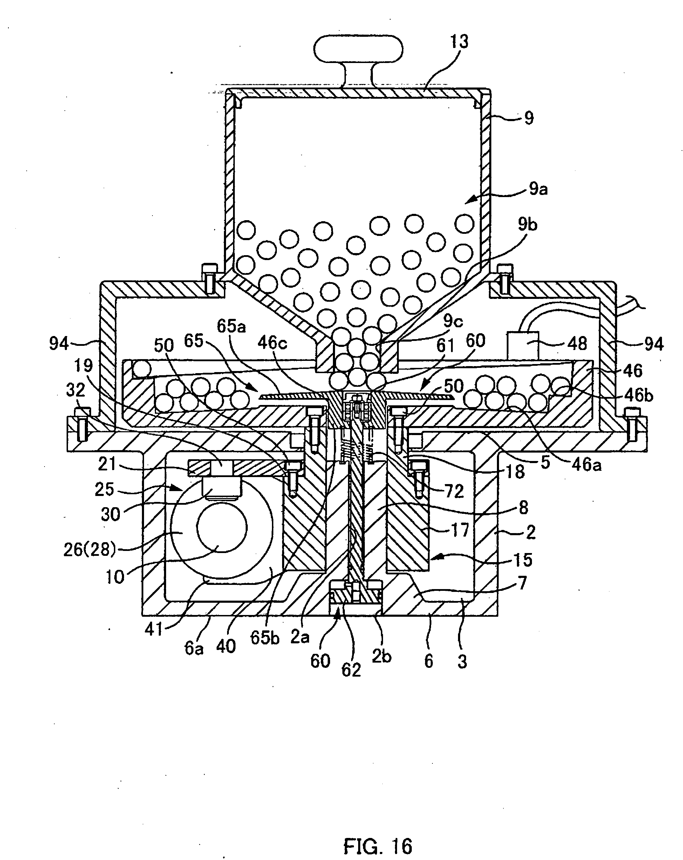

Fig. 16 is a diagram illustrating a different support method of a hopper..

In the foregoing embodiments, examples were explained, in which the hopper 9 is fastened to the support shaft 8 with support bolts passing through the support stop section 65, but as shown in Fig.. 16 for example, it may also be fastened through an arm section 94 to the outer surface of the housing 2 or fastened to another nearby facility and the like other than the housing 2.

## Claims

1. A product transport apparatus (1) comprising:
a transport section (46) for transporting a product (w) by oscillating;
a driving section (25, 35, 47) for applying oscillations to the transport section;
a product supply section (9) for storing products therein, the product supply section having an aperture (9c) for supplying the stored products to the transport section (46); a supply stop section (65) which causes at least some of the products (65) on the supply stop section (65) to move toward the transport section by oscillating, **characterized in that**
the supply stop section (65) stops the supply of the products from the aperture (9c) by being brought close to the aperture,
wherein, when the products are supplied from the product supply section (Q) to the transport section (46), the supply stop section (65) moves away from the aperture.

2. A product transport apparatus according to claim 1,
wherein the transport section (46) transports the products in a circumferential direction given by a circular circumference, and
the supply stop section (65) is provided positioned in the center of the circular circumference.

3. A product transport apparatus according to claim 1 or 2,
wherein the product supply section (9) is provided with the aperture (9c) below a storage section (9a) that can store the products, and
the products are supplied to the transport section (46) by dropping them from the aperture..

4. A product transport apparatus according to claim 3,
wherein the supply stop section (65) narrows a space linking the storage section (9a) and the transport section (46) when the supply stop section comes close to the aperture (9c), and the supply stop section widens the space when the supply stop section moves away from the aperture.

5. A product transport apparatus according to claim 3 or 4,
wherein the supply stop section (65) includes a placement section (65a) on which the products that have dropped from the aperture (9c) can be placed, and
the products are supplied to the transport section (46) after having been placed on the placement section (65a).

6. A product transport apparatus according to claim 5,
wherein the placement section (65a) is provided with an inclination whose height decreases towards an edge portion.

7. A product transport apparatus according to any of claims 1 to 6,
wherein, the supply stop section (65) contacts the transport section (46) when the supply stop section moves away from the aperture, and oscillates by receiving oscillations from the transport section..

8. A product transport apparatus according to any of claims 1 to 7, further comprising:
a detector (48) that detects the products on the transport section (46); and
a controller (70) that controls a position of the supply stop section based on a detection result of the detector..

9. A product transport apparatus according to any of claims 1 to 8,
wherein the supply stop section (65) does not contact against the aperture (9c).

10. A product transport apparatus according to any of claims 1 to 9,
wherein the supply stop section (65) comes close to or moves away from the aperture (9c) by air that is supplied to a location below the supply stop section.

11. A product transport apparatus according to any of claims 1 to 10,
further comprising a position adjustment mechanism (82) for adjusting the position of the supply stop section (65) when the supply stop section has moved close to the aperture.

## Patentansprüche

1. Produkttransportvorrichtung (1) mit:
einem Transportabschnitt (46) zum Transport eines Produkts (w) durch Schwingen,
einem Antriebsabschnitt (25, 35, 47), um den Transportabschnitt mit Schwingungen zu beaufschlagen,
einem Produktzufuhrabschnitt (9) zur Lagerung von Produkten, der eine Öffnung (9c) aufweist, um die gelagerten Produkte dem Transportabschnitt (46) zuzuführen,
einem Zufuhrstoppabschnitt (65), der veranlasst, dass sich mindestens einige der Produkte am Zufuhrstoppabschnitt (65) durch Schwingen zum Transportabschnitt hin bewegen,
**dadurch gekennzeichnet, dass**
der Zufuhrstoppabschnitt (65) die Zufuhr der Produkte von der Öffnung (9c) stoppt, indem er nahe an die Öffnung herangebracht wird,
wobei sich der Zufuhrstoppabschnitt (65) von der Öffnung weg bewegt, wenn die Produkte vom Produktzufuhrabschnitt (9) dem Transportabschnitt (46) zugeführt werden.

2. Produkttransportvorrichtung nach Anspruch 1, wobei der Transportabschnitt (46) die Produkte in einer durch einen kreisförmigen Umfang gegebenen Umfangsrichtung transportiert und der Zufuhrstoppabschnitt (65) in der Mitte des kreisförmigen Umfangs positioniert vorgesehen ist.

3. Produkttransportvorrichtung nach Anspruch 1 oder 2, wobei der Produktzufuhrabschnitt (9) mit der Öffnung (9c) unter einem Lagerabschnitt (9a) vorgesehen ist, in dem die Produkte gelagert werden können, und wobei die Produkte dem Transportabschnitt (46) zugeführt werden, indem sie von der Öffnung herunterfallen.

4. Produkttransportvorrichtung nach Anspruch 3, wobei der Zufuhrstoppabschnitt (65) einen Raum verengt, der den Lagerabschnitt (9a) mit dem Transportabschnitt (46) verbindet, wenn sich der Zufuhrstoppabschnitt der Öffnung (9c) nähert, und der Zufuhrstoppabschnitt den Raum erweitert, wenn sich der Zufuhrstoppabschnitt von der Öffnung weg bewegt.

5. Produkttransportvorrichtung nach Anspruch 3 oder 4, wobei der Zufuhrstoppabschnitt (65) einen Platzierungsabschnitt (65a) aufweist, auf den die von der Öffnung (9c) heruntergefallenen Produkte platziert werden können, und wobei die Produkte dem Transportabschnitt (46) zugeführt werden, nachdem sie auf den Platzierungsabschnitt (65a) platziert worden sind.

6. Produkttransportvorrichtung nach Anspruch 5, wobei der Platzierungsabschnitt (65a) mit einer Neigung versehen ist, deren Höhe zu einem Randabschnitt hin abnimmt.

7. Produkttransportvorrichtung nach einem der Ansprüche 1 bis 6, wobei der Zufuhrstoppabschnitt (65) den Transportabschnitt (46) kontaktiert, wenn sich der Zufuhrstoppabschnitt von der Öffnung weg bewegt, und schwingt, indem er vom Transportabschnitt mit Schwingungen beaufschlagt wird.

8. Produkttransportvorrichtung nach einem der Ansprüche 1 bis 7, ferner mit einem Detektor (48), der die Produkte auf dem Transportabschnitt (46) erfasst, und einer Steuerung (70), die eine Position des Zufuhrstoppabschnitts auf der Grundlage eines Erfassungsergebnisses des Detektors steuert.

9. Produkttransportvorrichtung nach einem der Ansprüche 1 bis 8, wobei der Zufuhrstoppabschnitt (65) die Öffnung (9c) nicht kontaktiert.

10. Produkttransportvorrichtung nach einem der Ansprüche 1 bis 9, wobei sich der Zufuhrstoppabschnitt (65) der Öffnung (9c) mittels Luft nähert oder sich von ihr weg bewegt, die einer Stelle unter dem Zufuhrstoppabschnitt zugeführt wird.

11. Produkttransportvorrichtung nach einem der Ansprüche 1 bis 10, ferner mit einem Positionsjustiermechanismus (82) zum Justieren der Position des Zufuhrstoppabschnitts (65), wenn sich der Zufuhrstoppabschnitt nahe an die Öffnung heran bewegt hat.

## Revendications

1. Appareil de transport (1) de produits comprenant :
une section de transport (46) pour transporter un produit (W) par oscillation ;
une section d'entraînement (25, 35, 47) pour appliquer des oscillations à la section de transport ;
une section d'alimentation (9) en produit pour y stocker les produits, la section d'alimentation en produit comportant une ouverture (9c) pour alimenter la section de transport (46) en produits stockés ;
une section d'arrêt d'alimentation (65) qui fait se déplacer par oscillation au moins une partie des produits sur ladite section d'arrêt d'alimentation (65), **caractérisée en ce que** la section d'arrêt d'alimentation (65) arrête l'alimentation des produits venant de l'ouverture (9c) en se rapprochant de ladite ouverture,
dans lequel, quand les produits sont alimentés de la section d'alimentation (9) en produit à la section de transport (46), la section d'arrêt d'alimentation (65) s'éloigne de l'ouverture.

2. Appareil de transport de produits selon la revendication 1, dans lequel
la section de transport (46) transporte les produits dans une direction circonférentielle donnée par une circonférence circulaire et
la section d'arrêt d'alimentation (65) est disposée au centre de la circonférence circulaire.

3. Appareil de transport de produits selon la revendication 1 ou 2, dans lequel
la section d'alimentation (9) en produits est disposée avec l'ouverture (9c) sous une section de stockage (9a) qui peut stocker les produits et
on alimente en produits la section de transport (46) en les laissant tomber depuis l'ouverture.

4. Appareil de transport de produits selon la revendication 3, dans lequel la section d'arrêt d'alimentation (65) réduit un espace reliant la section de stockage (9a) et la section de transport (46) quand ladite section d'arrêt d'alimentation se rapproche de l'ouverture (9c) et ladite section d'arrêt d'alimentation élargit ledit espace quand elle s'éloigne de l'ouverture.

5. Appareil de transport de produits selon la revendication 3 ou 4, dans lequel
la section d'arrêt d'alimentation (65) comprend une section de placement (65a) sur laquelle peuvent se placer les produits qui sont tombés de l'ouverture (9c) et
les produits sont fournis à la section de transport (46) après s'être placés sur la section de placement (65a).

6. Appareil de transport de produits selon la revendication 5, dans lequel la section de placement (65a) présente une pente dont la hauteur décroît vers la partie du bord.

7. Appareil de transport de produits selon l'une quelconque des revendications 1 à 6, dans lequel la section d'arrêt d'alimentation (65) entre en contact avec la section de transport (46) quand ladite section d'arrêt d'alimentation s'éloigne de l'ouverture et oscille en recevant des oscillations provenant de la section de transport.

8. Appareil de transport de produits selon l'une quelconque des revendications 1 à 7, comprenant en outre :
un détecteur (48) qui détecte les produits sur la section de transport (46) et
un régulateur (70) qui commande la position de la section d'arrêt d'alimentation en fonction du résultat de la détection par ledit détecteur.

9. Appareil de transport de produits selon l'une quelconque des revendications 1 à 8, dans lequel la section d'arrêt d'alimentation (65) ne vient pas au contact de l'ouverture (9c).

10. Appareil de transport de produits selon l'une quelconque des revendications 1 à 9, dans lequel la section d'arrêt d'alimentation (65) se rapproche ou s'éloigne de l'ouverture (9c) sous l'effet d'air amené à un endroit situé sous ladite section d'arrêt d'alimentation.

11. Appareil de transport de produits selon l'une quelconque des revendications 1 à 10, comprenant en outre un mécanisme de réglage de position (82) pour régler la position de la section d'arrêt d'alimentation (65) quand ladite section d'arrêt d'alimentation s'est éloignée de l'ouverture.
